(19) Europäisches Patentamt
European Patent Office
Office européen des brevets

(11) **EP 4 001 641 A1**

(12) **EUROPEAN PATENT APPLICATION**

(43) Date of publication:
**25.05.2022 Bulletin 2022/21**

(21) Application number: **20208111.3**

(22) Date of filing: **17.11.2020**

(51) International Patent Classification (IPC):
**F03D 80/00** (2016.01)     **G01P 5/14** (2006.01)

(52) Cooperative Patent Classification (CPC):
**F03D 80/00; G01P 5/14;** F05B 2270/321;
F05B 2270/80

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Gamesa Renewable Energy A/S**
**7330 Brande (DK)**

(72) Inventor: **Ramanujam, Giridhar**
**7330 Brande (DK)**

(74) Representative: **Aspacher, Karl-Georg**
**Siemens Gamesa Renewable Energy GmbH & Co. KG**
**Otto-Hahn-Ring 6**
**81739 München (DE)**

(54) **METHOD AND SENSOR MODULE FOR DETERMINING A DIRECTION OF A WIND FLOW AT A BLADE OF A WIND TURBINE**

(57)     It is described a sensor module (10) to be mounted to a blade (6) of a wind turbine (1) for determining a direction $\theta_{flow}$ of a wind flow at the blade (6). The sensor module (10) comprises first to third sensor elements (11, 12, 13) configured to sense magnitudes of first to third air pressures ($\sigma_1, \sigma_2, \sigma_3$) in first to third directions, whereas in the magnitudes of the air pressures are induced by a wind flow at the sensor elements. The directions of the sensor elements (11, 12, 13) are different from each other. Each sensor element (11, 12, 13) has an air inlet, and the air inlets of the sensor elements (11, 12, 13) are substantially not diametrically opposed to each other.

FIG 2

EP 4 001 641 A1

**Description**

Field of invention

The present invention relates to a method of determining a direction of a wind flow at a blade of a wind turbine, to a sensor module to be mounted to a blade of a wind turbine for determining a direction of a wind flow at the blade, and to a sensor system and a blade, each of which comprising such a sensor module.

Regulating the performance of wind turbines highly depends on an accurate and reliable prediction of an aerodynamic behaviour of a wind turbine blade under varying operating conditions experienced by the wind turbine blade. One of the key features of the flow over the wind turbine blade is the direction of the wind at the blade. Identifying and quantifying the direction of the wind could help to regulate the performance of the wind turbine blade with higher precision, and reduce design safety factors associated with an inaccuracy and uncertainty of simulation methods in a prediction of such flow behaviour on the wind turbine blades. Identifying the direction of the wind by means of a device could help to improve a wind turbine performance by influencing control parameters of the wind turbine such as pitch angle, rotor speed, yaw position, etc. for any given inflow condition.

Summary of the Invention

There may be a need for accurately and reliable determining a direction of a wind flow at a blade of a wind turbine. This need may be met by the subject matters according to the independent claims. The present invention is further developed as set forth in the dependent claims.

According to a first aspect of the invention, a sensor module to be mounted to a blade of a wind turbine for determining a direction of a wind flow at the blade is provided. The sensor module comprises a first sensor element configured to sense a first air pressure in a first direction, wherein the first air pressure is induced by a wind flow at the first sensor element; a second sensor element configured to sense a second air pressure in a second direction, wherein the second air pressure is induced by a wind flow at the second sensor element; and a third sensor element configured to sense a third air pressure in a third direction, wherein the third air pressure is induced by a wind flow at the third sensor element. The sensor module comprises either exactly three or a number, preferably an odd number, of sensor elements larger than three. The directions of the sensor elements are different from each other. Each sensor element has an air inlet. The air inlets of the sensor elements are substantially not diametrically opposed to each other.

The first, second and third directions, in which the first, second and third air pressures are sensed, can be determined in different manners. For example, each sensor element can comprise a channel and the air inlet. The air inlet can be defined by a circumferential edge, wherein each of the first, second and third directions are determined by a normal axis normally intersecting a center point of the circumferential edge. In another example, the first, second and third directions can be determined by a direction of a neutral axis of the channels at a plane, in which the circumferential edge is located. In another example, the first, second and third directions can just be determined based on flow measurements. The term "the air inlets of the sensor elements are substantially not diametrically opposed to each other" can be interpreted in that the first, second and third directions are substantially not diametrically opposed to each other, i.e. they have any angular difference from each other except for 0° and 180°.

According to an embodiment, the first to third sensor elements each are pitot static tubes measuring a dynamic pressure or pitot tubes measuring a total pressure as the first to third air pressures, respectively.

According to a second aspect of the invention, a sensor system to determine a direction of a wind flow at a blade of a wind turbine is provided. The sensor system comprises a sensor module comprising a number n of sensor elements configured to sense a number n of corresponding magnitudes of air pressures $\sigma_1, \sigma_2,..., \sigma_n$ in a number of n directions, wherein each magnitude of air pressure $\sigma_1, \sigma_2,..., \sigma_n$ is induced by a wind flow at the corresponding sensor element, wherein the directions are different from each other; and a determining section configured to determine the direction of the wind flow at the blade, wherein the determining section is configured to determine the direction $\theta_{flow}$ in a cartesian coordinate system with main axes x and y based on the following formula:

$$\theta_{flow} = 180° + \tan^{-1}\left(\left(\sum_{i=1}^{n} \sigma_i y_i\right)\Big/\left(\sum_{i=1}^{n} \sigma_i x_i\right)\right)$$

wherein $\sigma_i$ is a magnitude of a total pressure measured by a sensor element i with i = {0, 1, ..., n}; and
$x_i$ and $y_i$ are coefficients of a unit vector along each sensor element.

According to an embodiment, the determining section is configured to determine a stall of the wind flow at the blade, if the direction of the wind flow at the blade differs from a predetermined dominant direction, in particular if the direction of the wind flow at the blade deviates from the predetermined dominant direction, which substantially runs from a leading edge of the blade to a trailing edge of the blade, by more than a predetermined threshold angle. The measurement of total pressures in multiple directions advantageously enables the detection of stall on the blade. The ability to instantaneously detect stall can be used as a control measure to regulate a power performance of the wind turbine and to increase the AEP of the wind turbine.

Apart from detecting the stall, a flow separation and a radial flow on the blade surface, the present invention can also be used to identify other patterns in the nature of the oncoming wind. By monitoring the variation of the highest air pressure along with the azimuth position of the blade, inflow features like shear, veer, yaw errors, etc., can also be identified. Comparing the levels of the highest air pressures across multiple blades as a function of the azimuth position can also help to identify blade-to-blade variations due to pitch off-sets, differences in aeroelastic behaviour, and other such undesirable issues.

According to a third aspect of the invention, a blade of a wind turbine is provided, which comprises at least one of the above-mentioned sensor module. The blade further comprises a leading edge and a trailing edge; a suction side and a pressure side; an outboard portion which is closer to a tip of the blade than to a root of the blade; and an inboard portion which is closer to the root of the blade than to the tip of the blade. The at least one sensor module is located at the suction side in the outboard portion and closer to the trailing edge than to the leading edge.

In addition or alternatively, at least one further sensor module is located at the pressure side in the inboard portion and closer to the trailing edge than to the leading edge; and/or at least one further sensor module is located at the suction side in the inboard portion and closer to the trailing edge than to the leading edge.

According to an embodiment, the blade further comprises the above-mentioned sensor system, wherein the determining section is arranged inside the blade and connected to the sensor module via pressure hoses.

According to an embodiment, the blade further comprises the above-mentioned sensor system, wherein the determining section is arranged in a root of the blade and the sensor module comprises transducers configured to transduce the first to third air pressures into electric/optical signals, wherein the electric/optical signals are transmitted via wired or wireless data communication to the determining section.

According to an embodiment, at least one of the first to third sensor elements has an air inlet directed to the leading edge of the blade.

According to a fourth aspect of the invention, a method of determining a direction $\theta_{flow}$ of a wind flow at a blade of a wind turbine is provided. The method uses a sensor module comprising a number n of sensor elements configured to sense a number n of corresponding magnitudes of air pressures.

According to an embodiment, a stall of the wind flow at the blade is determined, if the direction of the wind flow at the blade differs from a predetermined dominant direction, in particular if the direction of the wind flow at the blade deviates from the predetermined dominant direction, which substantially runs from a leading edge of the blade to a trailing edge of the blade, by more than a predetermined threshold angle. The measurement of total pressures in multiple directions advantageously enables the detection of stall on the blade. The ability to instantaneously detect stall can be used as a control measure to regulate a power performance of the wind turbine and to increase the AEP of the wind turbine.

Apart from detecting the stall, a flow separation and a radial flow on the blade surface, the present invention can also be used to identify other patterns in the nature of the oncoming wind. By monitoring the variation of the highest air pressure along with the azimuth position of the blade, inflow features like shear, veer, yaw errors, etc., can also be identified. Comparing the levels of the highest air pressures across multiple blades as a function of the azimuth position can also help to identify blade-to-blade variations due to pitch offsets, differences in aeroelastic behaviour, and other such undesirable issues.

According to an embodiment, the determined direction of the wind flow at the blade is used for any one of the following: regulating the power output of the wind turbine; determining a soiling of the blade of the wind turbine; modifying a blade design by identifying flow characteristics, in particular in a root area of the blade, which is usually dominated by a three-dimensional flow behaviour; and/or determining a state of a boundary layer of the wind flow at the blade.

The first, second and third directions, in which the first, second and third air pressures are sensed, can be determined in different manners. For example, each sensor element can comprise a channel and a port. The port can be defined by a circumferential edge, wherein each of the first, second and third directions are determined by a normal axis normally intersecting a center point of the circumferential edge. In another example, the first, second and third directions can be determined by a direction of a neutral axis of the channels at a plane, in which the circumferential edge is located. In another example, the first, second and third directions can just be determined based on flow measurements.

The present invention makes use of total pressure measurements in three or more directions to identify the magnitude of local velocity of the wind. At the same time, the boundary layer state can be determined based on the determined direction of the wind. The present invention can help to develop smart turbines that could indicate a change in operating conditions by detecting the change in the flow behaviour on the blade and help to diagnose performance critical issues. The invention can also be used to control or regulate the wind turbine so as to adapt to changing inflow conditions. The invention can also help to understand the behaviour of prototype turbines and serve as a useful diagnostic toolbox for optimizing turbine operations. The present invention can also help to reassess many of internal design rules that prevent the wind turbine from being operated under high angles of attack due to the risk of stall, thereby improving the efficiency of the wind turbine.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Fig. 1     shows a wind turbine and the different elements thereof;

Fig. 2     shows a plan view of a sensor system according to an embodiment of the present invention;

Fig. 3     shows a flowchart of a method of determining a direction of a wind flow at a blade of a wind turbine according to an embodiment of the present invention;

Fig. 4     shows a cross-section of an outboard portion of a blade according to an embodiment of the present invention; and

Fig. 5     shows a cross-section of an inboard portion of the blade of Fig. 4.

Detailed Description

The illustrations in the drawings are schematically. It is noted that in different figures, similar or identical elements are provided with the same reference signs.

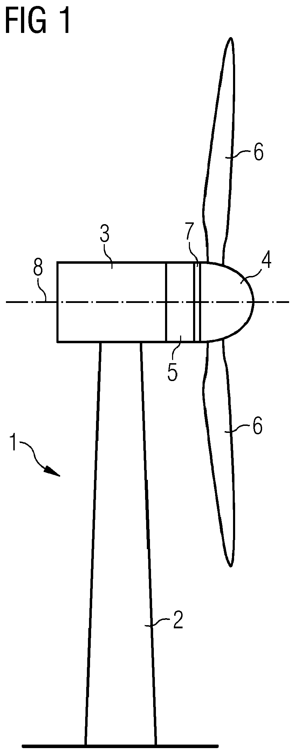

**Fig. 1** shows a wind turbine 1. The wind turbine 1 comprises a nacelle 3 and a tower 2. The nacelle 3 is mounted at the top of the tower 2. The nacelle 3 is mounted rotatable with regard to the tower 2 by means of a yaw bearing. The axis of rotation of the nacelle 3 with regard to the tower 2 is referred to as the yaw axis.

The wind turbine 1 also comprises a hub 4 with three rotor blades 6 (of which two rotor blades 6 are depicted in Fig. 1). The hub 4 is mounted rotatable with regard to the nacelle 3 by means of a main bearing 7. The hub 4 is mounted rotatable about a rotor axis of rotation 8.

The wind turbine 1 furthermore comprises a generator 5. The generator 5 in turn comprises a rotor 10 connecting the generator 5 with the hub 4. The hub 4 is connected directly to the generator 5, thus the wind turbine 1 is referred to as a gearless, direct-driven wind turbine. Such a generator 5 is referred as direct drive generator 5. As an alternative, the hub 4 may also be connected to the generator 5 via a gear box. This type of wind turbine 1 is referred to as a geared wind turbine. The present invention is suitable for both types of wind turbines 1.

The generator 5 is accommodated within the nacelle 3. The generator 5 is arranged and prepared for converting the rotational energy from the hub 4 into electrical energy in the shape of an AC power.

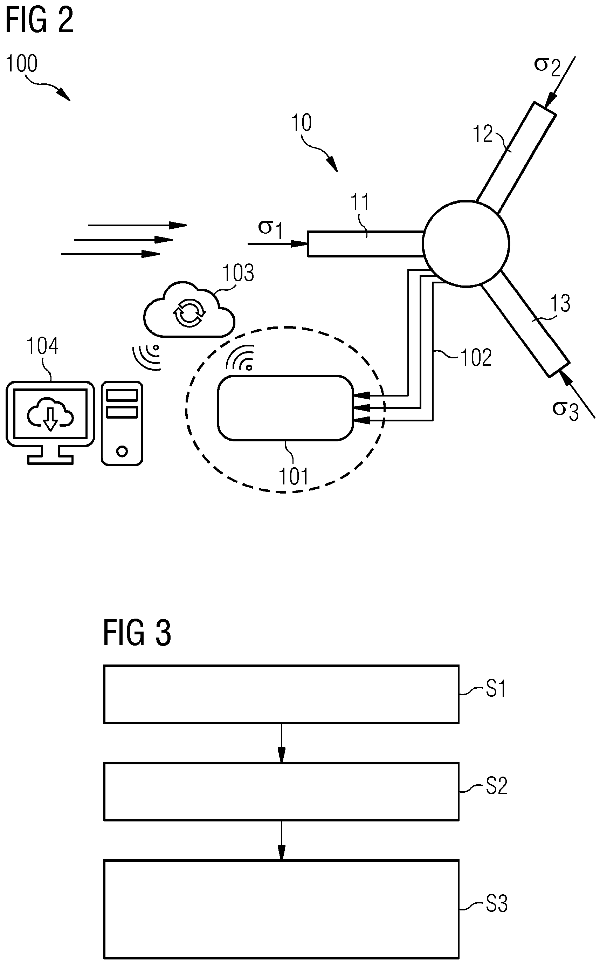

**Fig. 2** shows a plan view of a sensor system 100 according to an embodiment of the present invention. The sensor system 100 is configured to determine a direction of a wind flow at the blade 6 of the wind turbine 1. The sensor system 100 comprises a sensor module 10 and a determining section 101 configured to determine the direction of the wind flow at the blade 6.

The sensor module 10, which can be embodied as a relatively flat surface module, is mounted to the blade 6 of the wind turbine 1 for determining a direction of a wind flow at the blade 6. The sensor module 10 can be mounted in a relatively small height above a surface of the blade 6. The sensor module 10 comprises a first sensor element 11 configured to sense a magnitude of a first air pressure $\sigma_1$ in a first direction, wherein the magnitude of the first air pressure $\sigma_1$ is induced by a wind flow at the first sensor element 11; a second sensor element 12 configured to sense a magnitude of a second air pressure $\sigma_2$ in a second direction, wherein the magnitude of the second air pressure $\sigma_2$ is induced by a wind flow at the second sensor element 12; and a third sensor element 13 configured to sense a magnitude of a third air pressure $\sigma_3$ in a third direction, wherein the magnitude of the third air pressure $\sigma_3$ is induced by a wind flow at the third sensor element 13. The first, second and third directions are different from each other, for example by an angular difference of 120°. The first to third sensor elements 11, 12, 13 can be pitot static tubes measuring a dynamic pressure or pitot tubes measuring a total pressure as the first to third air pressures $\sigma_1$, $\sigma_2$, $\sigma_3$, respectively. The first to third sensor elements 11, 12, 13 are usually arranged in the same height from a surface of the blade 6.

Each of the first to third sensor elements 11, 12, 13 can comprise a port or an inlet for the incoming air, and a channel which diverts the air from the associated port to a determining section 101, for example in the shape of a common sensor box, which can optionally be included in the sensor module 10.

The sensor module 10 (surface module) helps to detect the total pressures by diverting air through the sensor elements 11, 12, 13 (ports, channels) to the determining section 101 (sensor box). Each channel faces a different direction, and hence each channel experiences a different total pressure as measured by the associated pressure sensor in the determining section 101 (sensor box). The determining section 101 (sensor box) can comprise various sensors or transducers for transducing the total air pressures to electric/optical signals, an onboard microcomputer and a signal transmission module that collects, processes and transmits data wirelessly to any receiving device (a cloud server 103 or the turbine controller 104).

That sensor element 11, 12 13 (port, channel), which faces the air stream (or closest in direction to it), experiences the greatest total pressure, and the other sensor elements 11, 12 13 (ports, channels) experience lower pressures. All sensor elements (channels) 11, 12 13 are equidistant in their angular position, i.e. the angle between the channels can be substantially equal 120° for the present three-channel-system. The key principle is the variation in dynamic pressure as a function of the measurement direction, i.e. of the direction to which the sensor element (channel) 11, 12 13 is faced.

In more detail, the determining section 101 is configured to identify that sensor element out of the first to third sensor elements 11, 12, 13, which senses the highest air pressure $\sigma_{max}$; to calculate a first pressure difference $\Delta P_1$ between the highest air pressure $\sigma_{max}$ and a pressure of one of the remaining sensor elements; to calculate a second pressure difference $\Delta P_2$ between the highest air pressure $\sigma_{max}$ and a pressure of the other one of the remaining sensor elements; and to determine the direction $\theta_{flow}$ of the wind flow at the blade 6 based on a direction of that sensor element out of the first to third sensor elements 11, 12, 13, which senses the highest air pressure $\sigma_{max}$, the first and second pressure differences $\Delta P_1$, $\Delta P_2$, and angular differences between the direction of that sensor element out of the first to third sensor elements 11, 12, 13, which senses the highest air pressure $\sigma_{max}$, and each of the directions of the remaining sensor elements.

A simple embodiment of the sensor module can comprise three pitot tubes pointing in different directions at the same eight from the surface of the blade 6. By nature, the measurement requires a minimum of three sensor elements (ports, channels) 11, 12, 13 in order to conclusively determine the wind direction in a plane above the surface of the blade 6, where the sensor elements 11, 12, 13 are arranged. In modifications, the sensor module 10 can comprises an odd number of sensor elements larger than three, wherein the directions of the sensor elements 11, 12, 13, ... are different from each other, each sensor element 11, 12, 13, ... has an air inlet; and the air inlets of the sensor elements 11, 12, 13, ... are substantially not diametrically opposed to each other. The invention has particular benefits for applications, where a dominant or desired flow direction is not present and the flow may be in any direction, for instance by turbulences or stall effects.

The determining section 101 could further be configured to determine a stall of the wind flow at the blade 6, if the direction of the wind flow at the blade 6 differs from a predetermined dominant direction, in particular if the direction of the wind flow at the blade 6 deviates from the predetermined dominant direction, which substantially runs from a leading edge 61 of the blade 6 to a trailing edge 62 of the blade 6, by more than a predetermined threshold angle.

**Fig. 3** shows a flowchart of a method of determining a direction of a wind flow at a blade 6 of a wind turbine 1 according to an embodiment of the present invention. The method uses the sensor module 10 and comprises the following steps:

In a step S1, that sensor element out of the first to third sensor elements 11, 12, 13 is identified, which senses the highest (total) air pressure $\sigma_{max}$.

In a step S2, first pressure difference $\Delta P1$ between the highest air pressure $\sigma_{max}$ and a pressure of one of the remaining sensor elements is calculated, and a second pressure difference $\Delta P_2$ between the highest air pressure $\sigma_{max}$ and a pressure of the other one of the remaining sensor elements is calculated.

In a step S3, the direction $\theta_{flow}$ of the wind flow at the blade 6 is determined based on the direction $\theta_{flow}$ of the wind flow at the blade 6 based on a direction of that sensor element out of the first to third sensor elements 11, 12, 13, which senses the highest air pressure $\sigma_{max}$, the first and second pressure differences $\Delta P_1$, $\Delta P_2$, and angular differences between the direction of that sensor element out of the first to third sensor elements 11, 12, 13, which senses the highest air pressure $\sigma_{max}$, and each of the directions of the remaining sensor elements. For example, the direction $\theta_{flow}$ of the wind flow at the blade 6 can be determined based on the following equation:

$$\theta_{flow} = \theta\sigma_{max} - (\Delta P_1 - \Delta P_2)/(\Delta P_1 + \Delta P_2) * 60°,$$

wherein

the first, second and third directions have an angle distance of 120° from each other,
$\theta_{flow}$ is the direction of the wind flow at the blade 6,
$\theta_{\sigma max}$ is the direction of that sensor element sensing the highest air pressure $\sigma_{max}$,
$\Delta P_1$ is the first pressure difference, and
$\Delta P_2$ is the second pressure difference.

In the above-mentioned embodiments, the sensor module 10 comprising exactly three sensor elements 11, 12, 13, which are arranged with an angular distance of 120° from each other. However, the present invention can also be embodied by a sensor module having or more than three sensor elements, in particular in an odd number. In this case, the sensor module 10 comprises at least one further sensor element configured to sense at least one further air pressure in at least one further direction, wherein the at least one further air pressure is induced by a wind flow at the at least one further sensor element and the at least one further direction is different from the first, second and third directions. The method can comprise a step of calculating at least one further pressure difference between the highest air pressure omax and the at least one further air pressure. The step of the determining of the direction of the wind flow at the blade 6 can further be based on the at least one further pressure difference and an angular difference between the direction of that sensor element out of the first to third sensor elements, which senses the highest air pressure, and the at least one further direction.

More general, a method of determining a direction $\theta_{flow}$ of the wind flow at the blade 6 of the wind turbine 1 can use the sensor module 10 comprising a number n of sensor elements 11, 12, 13 configured to sense a number n of corresponding magnitudes of air pressures $\sigma_1, \sigma_2,..., \sigma_n$ in a number of n directions, wherein each magnitude of air pressure $\sigma_1, \sigma_2,..., \sigma_n$ is induced by a wind flow at the corresponding sensor element 11, 12, 13, wherein the directions are different from each other, wherein the direction $\theta_{flow}$ of the wind flow in a cartesian coordinate system with main axes x and y is determined based on the following formula:

$$\theta_{flow} = 180° + \tan^{-1}\left(\left(\sum_{i=1}^{n}\sigma_i y_i\right)\bigg/\left(\sum_{i=1}^{n}\sigma_i x_i\right)\right)$$

wherein $\sigma_i$ is a magnitude of a total pressure measured by a sensor element i with i = {0, 1, ..., n}; and
$x_i$ and $y_i$ are coefficients of a unit vector along each sensor element 11, 12, 13.

The above-mentioned formula is based on the following considerations. A total pressure measured at each sensor element 10, 11, 12 can be calculated as a vector expression:

$$\vec{P_i} = \sigma_i(x_i\hat{\imath} + y_i\hat{\jmath})$$

wherein

$\sigma_i$ is a magnitude of total pressure measured by a sensor element i with i = {0, 1, ..., n}; and
$(x_i\hat{\imath} + y_i\hat{\jmath})$ is a unit vector along a direction of a sensor element i; and $\hat{\imath}$ and $\hat{\jmath}$ are unit vectors along primary axes of the blade 6 in a chordwise direction and a spanwise direction thereof.

A vector sum of all the total pressure vectors will yield a vector along the direction diametrically opposite to the direction of air flow:

$$\vec{P} = \sum_{i=1}^{n} \vec{P_i} = \left( \sum_{i=1}^{n} \sigma_i x_i \right) \hat{\imath} + \left( \sum_{i=1}^{n} \sigma_i y_i \right) \hat{\jmath}$$

From the above expression, the direction $\theta_{flow}$ of the wind flow on the surface of the blade is calculated as claimed.

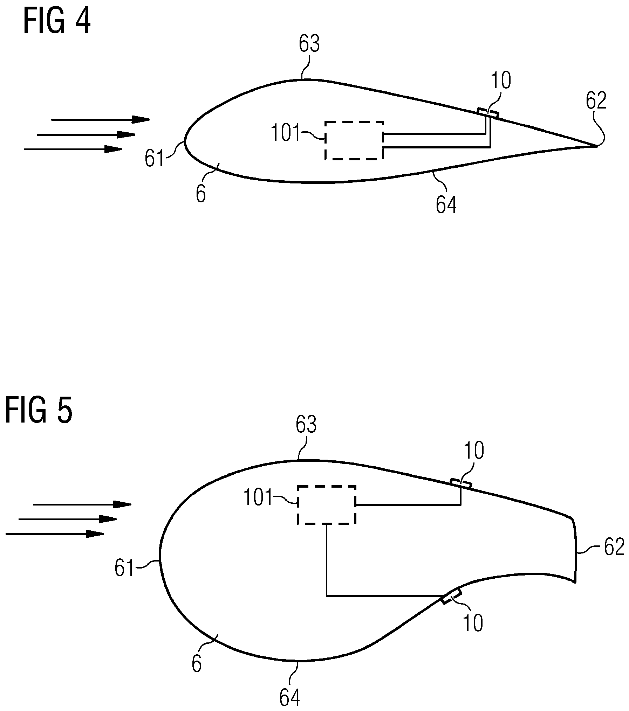

The present invention also enables further benefits, for example a stall determination. The stall of the wind flow at the blade 6 can be determined if the direction of the wind flow at the blade 6 differs from a predetermined dominant direction, in particular if the direction of the wind flow at the blade 6 deviates from the predetermined dominant direction, which substantially runs from a leading edge 61 of the blade 6 to a trailing edge 62 of the blade 6, by more than a predetermined threshold angle (see figures 4 and 5).

Furthermore, the determined direction of the wind flow at the blade 6 can be used for regulating the power output of the wind turbine 1; for determining a soiling of the blade 6 of the wind turbine 1; modifying a blade design by identifying flow characteristics, in particular in a root area of the blade 6; and/or for determining a state of a boundary layer of the wind flow at the blade 6.

**Fig. 4** shows a cross-section of an outboard portion of a blade 6 according to an embodiment of the present invention. The blade 6 comprises the sensor module 10 mounted at a surface of the blade 6 and a determining section 101 being incorporated in the blade 6. The blade 6 further comprises a leading edge 61 and a trailing edge 62, a suction side 63 and a pressure side 64, the outboard portion which is closer to a tip of the blade 6 than to a root of the blade 6, and an inboard portion (not shown in Fig. 4) which is closer to the root of the blade 6 than to the tip of the blade 6. The at least one sensor module 10 is located at the suction side 63 in the outboard portion and closer to the trailing edge 62 than to the leading edge 61.

Although the sensor module 10 can be placed on any part of the surface of the blade 6 depending on the requirements, the dominant flow direction of the wind at the blade 6 is from the leading edge 61 towards the trailing edge 62 in the outboard section of the blade 6. Here, the flow direction is mainly used to characterize a stall by indicating an anormal direction or reversal of the flow locally on some part of the blade 6, especially in the aft region (region of the trailing edge 62) on the suction side. For example, the sensor module 10 can be arranged from the leading edge 61 at a distance between 50 to 98% of a chord length in the cross-section of the blade 6. Placing the sensor module 10 in that location can help identify the onset of stall in an instantaneous manner (alternatively, the sensor module 10 can also be arranged from the leading edge 61 at a distance between 40 to 98% of the chord length).

**Fig. 5** shows a cross-section of an inboard portion of the blade 6 of Fig. 4. The blade 6 further comprises at least one sensor module 10 which is located at the pressure side 64 in the inboard portion and closer to the trailing edge 62 than to the leading edge 61. The blade 6 further comprises at least one further sensor module 10 which is located at the suction side 63 in the inboard portion and closer to the trailing edge 62 than to the leading edge 61.

In the inboard section of the blade 6, the flow direction does not always reverse in case of stalling, but rather moves outwards in the radial direction. The weaker the boundary layer gets, the more prominent the radial flow becomes. Hence, the flow can take any direction. The present invention is advantageous as it uses a small number of sensor elements 11, 12, 13 (ports, channels) in the sensor module 10 to determine the flow direction. The sensor module 10 can be placed on the suction side and/or the pressure side based on the requirement.

In the embodiments of Figures 4 and 5, the blade 6 further comprises the above-mentioned determining section 101 so that a sensor system 100 is established. The determining section 101 of the sensor system 100 is arranged inside the blade 6 and connected to the sensor module 10 via pressure hoses 102.

In another embodiment, the determining section 101 can be arranged in a root of the blade 6. The sensor module 10 can comprise transducers which are configured to transduce the magnitudes of the first to third air pressures $\sigma_1$, $\sigma_2$, $\sigma_3$ into electric/optical signals, wherein the electric/optical signals are transmitted via wired or wireless data communication to the determining section 101.

In the present invention, the determining section 101, which can be embodied as a sensor box integrating a data acquisition module, a processing module and a communication module, can be placed in close proximity to the sensor module 10 with relatively short pressure hoses 102. Alternatively, the determining section 101 (sensor box) can be placed in the root of the blade 6 or the hub 4 with transducers located either locally at the determining section 101 (sensor box) with pressure hoses 102 running along the blade 6, or with transducers integrated into the sensor module 10, and data from the sensor module 10 are communicated to the determining section 101 by means of cable running along the blade 6 or wirelessly.

In all embodiments, the sensor module 10 can comprise either exactly three or an odd number of sensor elements 11, 12, 13 larger than three. Each sensor element 11, 12, 13 can have an air inlet, and the air inlets of the sensor elements 11, 12, 13 are substantially not diametrically opposed to each.

In all embodiments, at least one of the first to third sensor elements 11, 12, 13 can be a pitot static tube measuring a dynamic pressure or a pitot tube measuring a total pressure, wherein the tube has an air inlet directed to the leading edge 61 of the blade 6.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. A sensor module (10) to be mounted to a blade (6) of a wind turbine (1) for determining a direction of a wind flow at the blade (6), the sensor module (10) comprising:

   a first sensor element (11) configured to sense a magnitude of a first air pressure ($\sigma_1$) in a first direction, wherein the magnitude of the first air pressure ($\sigma_1$) is induced by a wind flow at the first sensor element (11);
   a second sensor element (12) configured to sense a magnitude of a second air pressure ($\sigma_2$) in a second direction, wherein the magnitude of the second air pressure ($\sigma_2$) is induced by a wind flow at the second sensor element (12); and
   a third sensor element (13) configured to sense a magnitude of a third air pressure ($\sigma_3$) in a third direction, wherein the magnitude of the third air pressure ($\sigma_3$) is induced by a wind flow at the third sensor element (13); wherein
   the sensor module (10) comprises either exactly three or a number, preferably an odd number, of sensor elements larger than three;
   the directions of the sensor elements (11, 12, 13) are different from each other;
   each sensor element (11, 12, 13) has an air inlet; and
   the air inlets of the sensor elements (11, 12, 13) are substantially not diametrically opposed to each other.

2. The sensor module (10) according to the preceding claim, wherein
   the first to third sensor elements (11, 12, 13) each are pitot static tubes measuring a dynamic pressure or pitot tubes measuring a total pressure as the first to third air pressures ($\sigma_1$, $\sigma_2$, $\sigma_3$), respectively.

3. A sensor system (100) to determine a direction of a wind flow at a blade (6) of a wind turbine (1), the sensor system (100) comprising:

   a sensor module (10) comprising a number n of sensor elements (11, 12, 13) configured to sense a number n of corresponding magnitudes of air pressures $\sigma_1$, $\sigma_2$,..., $\sigma_n$ in a number of n directions, wherein each magnitude of air pressure $\sigma_1$, $\sigma_2$,..., $\sigma_n$ is induced by a wind flow at the corresponding sensor element (11, 12, 13), wherein the directions are different from each other, ; and
   a determining section (101) configured to determine the direction of the wind flow at the blade (6), wherein the determining section (10) is configured to determine the direction $\theta_{flow}$ in a cartesian coordinate system with main axes x and y based on the following formula:

$$\theta_{flow} = 180° + \tan^{-1}\left(\left(\sum_{i=1}^{n}\sigma_i y_i\right)\Big/\left(\sum_{i=1}^{n}\sigma_i x_i\right)\right)$$

   wherein $\sigma_i$ is a magnitude of a total pressure measured by a sensor element i with i = {0, 1, ..., n}; and
   $x_i$ and $y_i$ are coefficients of a unit vector along each sensor element.

4. The sensor system (100) according to the preceding claim, wherein
   the determining section (101) is configured to determine a stall of the wind flow at the blade (6), if the direction of the wind flow at the blade (6) differs from a predetermined dominant direction, in particular if the direction of the wind flow at the blade (6) deviates from the predetermined dominant direction, which substantially runs from a leading edge (61) of the blade (6) to a trailing edge (62) of the blade (6), by more than a predetermined threshold angle.

5. A blade (6) of a wind turbine (1) comprising at least one sensor module (10) according to any one of claims 1 and 2, the blade (6) further comprising:

> a leading edge (61) and a trailing edge (62);
> a suction side (63) and a pressure side (64);
> an outboard portion which is closer to a tip of the blade (6) than to a root of the blade (6); and
> an inboard portion which is closer to the root of the blade (6) than to the tip of the blade (6); wherein
> the at least one sensor module (10) is located at the suction side (63) in the outboard portion and closer to the trailing edge (62) than to the leading edge (61).

6. A blade (6) of a wind turbine (1) comprising at least one sensor module (10) according to any one of claims 1 and 2, the blade (6) further comprising:

> a leading edge (61) and a trailing edge (62);
> a suction side (63) and a pressure side (64);
> an outboard portion which is closer to a tip of the blade (6) than to a root of the blade (6); and
> an inboard portion which is closer to the root of the blade (6) than to the tip of the blade (6); wherein
> at least one further sensor module (10) is located at the pressure side (64) in the inboard portion and closer to the trailing edge (62) than to the leading edge (61); and/or
> at least one further sensor module (10) is located at the suction side (63) in the inboard portion and closer to the trailing edge (62) than to the leading edge (61).

7. The blade (6) according to any one of claims 5 and 6, further comprising the sensor system (100) according to any one of claims 3 and 4, wherein
the determining section (101) is arranged inside the blade (6) and connected to the sensor module (10) via pressure hoses (102).

8. The blade (6) according to any one of claims 5 to 7, further comprising the sensor system (100) according to any one of claims 3 and 4, wherein
the determining section (101) is arranged in a root of the blade (6) and the sensor module (10) comprises transducers configured to transduce the magnitudes of the first to third air pressures ($\sigma_1$, $\sigma_2$, $\sigma_3$) into electric/optical signals, wherein the electric/optical signals are transmitted via wired or wireless data communication to the determining section (101).

9. The blade (6) according to any one of claims 5 to 8, wherein
at least one of the first to third sensor elements (11, 12, 13) has an air inlet directed to the leading edge (61) of the blade (6).

10. A method of determining a direction $\theta_{flow}$ of a wind flow at a blade (6) of a wind turbine (1) by use of a sensor module (10) comprising a number n of sensor elements (11, 12, 13) configured to sense a number n of corresponding magnitudes of air pressures $\sigma_1$, $\sigma_2$,..., $\sigma_n$ in a number of n directions, wherein each magnitude of air pressure $\sigma_1$, $\sigma_2$,..., $\sigma_n$ is induced by a wind flow at the corresponding sensor element (11, 12, 13), wherein the directions are different from each other, wherein the direction $\theta_{flow}$ of the wind flow in a cartesian coordinate system with main axes x and y is determined based on the following formula:

$$\theta_{flow} = 180° + \tan^{-1}\left(\left(\sum_{i=1}^{n} \sigma_i y_i\right) \bigg/ \left(\sum_{i=1}^{n} \sigma_i x_i\right)\right)$$

wherein $\sigma_i$ is a magnitude of a total pressure measured by a sensor element i with i = {0, 1, ..., n}; and
$x_i$ and $y_i$ are coefficients of a unit vector along each sensor element.

11. The method according to claim 10, wherein
a stall of the wind flow at the blade (6) is determined, if the direction of the wind flow at the blade (6) differs from a predetermined dominant direction, in particular if the direction of the wind flow at the blade (6) deviates from the predetermined dominant direction, which substantially runs from a leading edge (61) of the blade (6) to a trailing edge (62) of the blade (6), by more than a predetermined threshold angle.

12. The method according to any one of claims 10 and 11, wherein the determined direction of the wind flow at the blade (6) is used for any one of the following:

regulating a power output of the wind turbine (1);
determining a soiling of the blade (6) of the wind turbine (1);
modifying a blade design by identifying flow characteristics, in particular in a root area of the blade (6);
determining a state of a boundary layer of the wind flow at the blade (6).

## FIG 1

FIG 2

FIG 3

FIG 4

FIG 5

**Europäisches Patentamt**
**European Patent Office**
**Office européen des brevets**

# EUROPEAN SEARCH REPORT

Application Number

EP 20 20 8111

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/042803 A1 (SHIELDS JAMES ALEXANDER [GB]) 19 April 2007 (2007-04-19) * page 7, line 18 - page 9, line 5; figure 3 * | 1-12 | INV. F03D80/00 G01P5/14 |
| X | DE 10 2016 101304 A1 (INFINEON TECHNOLOGIES AG [DE]) 4 August 2016 (2016-08-04) * paragraphs [0032], [0033]; figure 1 * | 1,3,10 | |
| A | GB 2 067 247 A (ERNO RAUMFAHRTTECHNIK GMBH) 22 July 1981 (1981-07-22) * figure 3 * | 1,3,5,10 | |
| A | WO 2008/129112 A1 (GAMESA INNOVATION & TECH SL [ES] ET AL.) 30 October 2008 (2008-10-30) * figures 1-3 * | 1,3,5,10 | |
| A | WO 2012/122669 A1 (GEN ELECTRIC [US]; XIONG WEI [US] ET AL.) 20 September 2012 (2012-09-20) * paragraph [0036]; figures 1,7-9 * | 1,3,5,10 | TECHNICAL FIELDS SEARCHED (IPC) F03D G01P |

The present search report has been drawn up for all claims

| Place of search | Date of completion of the search | Examiner |
|---|---|---|
| The Hague | 30 April 2021 | Bradley, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 20 8111

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2021

| Patent document cited in search report | | Publication date | Patent family member(s) | | Publication date |
|---|---|---|---|---|---|
| WO 2007042803 | A1 | 19-04-2007 | NONE | | |
| DE 102016101304 | A1 | 04-08-2016 | CN | 105842476 A | 10-08-2016 |
| | | | DE | 102016101304 A1 | 04-08-2016 |
| | | | KR | 20160094312 A | 09-08-2016 |
| | | | KR | 20180080705 A | 12-07-2018 |
| | | | US | 2016223579 A1 | 04-08-2016 |
| GB 2067247 | A | 22-07-1981 | DE | 3000678 A1 | 16-07-1981 |
| | | | DK | 526780 A | 11-07-1981 |
| | | | GB | 2067247 A | 22-07-1981 |
| WO 2008129112 | A1 | 30-10-2008 | ES | 2306609 A1 | 01-11-2008 |
| | | | WO | 2008129112 A1 | 30-10-2008 |
| WO 2012122669 | A1 | 20-09-2012 | CN | 103443454 A | 11-12-2013 |
| | | | DE | 112011105026 T5 | 02-01-2014 |
| | | | US | 2014356165 A1 | 04-12-2014 |
| | | | WO | 2012122669 A1 | 20-09-2012 |

EPO FORM P0459

For more details about this annex : see Official Journal of the European Patent Office, No. 12/82